# EUROPEAN PATENT SPECIFICATION

(11) **EP 2 951 065 B1**
(45) Date of publication and mention of the grant of the patent: **15.03.2017**
(21) Application number: 14715715.0
(22) Date of filing: 30.01.2014
(51) Int. Cl.: B60T 1/06, B60K 6/365, B60K 6/387, B60W 10/02, B60W 10/11, B60W 30/19, F16H 61/04

(54) **BRAKE DEVICE FOR A GEARBOX, GEARBOX WITH SUCH A BRAKE DEVICE, , VEHICLE WITH SUCH A GEARBOX, AND A METHOD FOR STARTING SUCH A VEHICLE**
BREMSANORDNUNG EINES GETRIEBES & xA;GETRIEBE MIT SO EINER BREMSANORDNUNG, FAHRZEUG MIT SO EINEM GETRIEBE UND STARTVERFAHREN EINES SOLCHEN FAHRZEUGES
FREINAGE D'UN TRANSMISSION, TRANSMISSION AVEC UN TEL FREINAGE, VEHICULE AVEC UN TEL TRANSMISSION ET PROCEDE DE COMMENCEMENT (UN PROMENADE EN VOITURE)

(30) Priority: 04.02.2013 SE 1350129
(43) Date of publication of application: 09.12.2015
(73) Proprietor: Scania CV AB, 151 87 Södertälje (SE)
(72) Inventor: UDD, Jonas, 112 25 Stockholm (SE); KJELL, Anders, 178 38 Ekerö (SE)
(74) Representative: Scania CV AB
(86) International application number: PCT/SE2014/050115
(87) International publication number: WO 2014/120075

(56) References cited:
- WO-A1-2011/062544
- US-A1- 2010 044 183

## Description

### BACKGROUND AND PRIOR ART

The present invention pertains to a braking device for a gearbox according to the preamble of claim 1, a gearbox according to the preamble of claim 9, a vehicle according to the preamble of claim 11 and a method to start a vehicle according to the preamble of patent claim 12.

Vehicles, and in particular heavy goods vehicles, e.g. trucks, are usually equipped with a gearbox connected to the combustion engine, which gearbox may be automatic, manual or a combination thereof. In an automated manual transmission, a so-called AMT gearbox, the gearbox is controlled by an electronic control device. Such a gearbox may be equipped with a main shaft and a side shaft parallel thereto. The gearbox may also be equipped with a range gearbox, which may constitute a separate device or be integrated in the gearbox. The main shaft is connectible to an input shaft via the side shaft and to an output shaft in the gearbox via the range gearbox, if this is integrated in the gearbox. The gearbox may also be equipped with a split gear unit, via which the side shaft is connectible via the input shaft. A brake mechanism is arranged to retard the side shaft in connection with change of gears in the gearbox, in order to achieve synchronous rotation speeds in the side shaft and the main shaft, so that the new gear may be engaged without any greater torque existing between those transmission parts in the gearbox which are brought to engage with each other at the moment the new gear is engaged. The brake mechanism is thus used to retard the side shaft in relation to the main shaft at a stage during a shifting operation when the main shaft is in the neutral position, while the side shaft is disconnected from the main shaft.

In gearboxes of this type, the synchronisation devices, comprising conical synchronisation rings and coupling rings, are replaced by toothed operating sleeves, which are displaced axially in order to engage with cogwheels placed on the main shaft. Each cogwheel placed on the main shaft is engaged with corresponding cogwheel elements, which are anti-rotationally connected with the side shaft. On shifting, the operating sleeve is displaced axially in order to engage with coupling teeth arranged on a selectable cogwheel, in order to connect the cogwheel to, and rotation lock it, on the main shaft.

Under certain operational conditions it is, however, difficult to engage the starting gear, since the geometry of the operating sleeve's teeth and the coupling teeth in the cogwheel for the starting gear entails that the operating sleeve is prevented from being displaced axially and thus engaging with the coupling teeth on the cogwheel for the starting gear. In order for the operating sleeve to be displaced axially, the cogwheel for the starting gear must be offset at an angle in relation to the operating sleeve, so that the toothing of the operating sleeve may be inserted in the hatches created between the coupling teeth in the cogwheel for the starting gear. If the cogwheel for the starting gear and the operating sleeve are so offset at an angle in relation to each other that the coupling teeth in the cogwheel for the starting gear and the toothing of the operating sleeve coincide axially, wholly or partly, the axial end surfaces of the coupling teeth of the cogwheel for the starting gear and the axial end surfaces of the toothing of the operating sleeve abut against each other, and prevent the toothing of the operating sleeve from being inserted in the hatches between the coupling teeth of the cogwheel for the starting gear.

In order to facilitate engaging the starting gear, the axial displacement of the operating sleeve is carried out when there is a small speed difference between the main shaft and the side shaft. This may be achieved when the vehicle is slowing down and comes to a standstill and the gearbox is prepared for engagement of the starting gear. The braking device is then used to retard the side shaft in relation to the main shaft, while the side shaft is disconnected from the main shaft. The engagement of the starting gear takes place with a certain speed difference between the main shaft and the side shaft. If the speed difference between the main shaft and the side shaft is too big, the driver and passengers in the vehicle will experience a disruption to their comfort in the form of a shock in the vehicle. If the speed difference is too small, however, the operating sleeve may not be displaced axially for the reasons described above and the result is a missed gear selection, entailing that a new gear manoeuvre must be carried out in the gearbox, which leads to long shifting time. It is thus very difficult to use the braking mechanism of the side shaft in order to brake down the side shaft to the optimal speed difference between the main shaft and the side shaft for gear selection.

The document WO2011/062544 shows a gearbox, which is equipped with a main shaft and a side shaft parallel thereto. A range gearbox is integrated in the gearbox. The main shaft is connectible to an input shaft to the gearbox via the side shaft and to an output shaft in the gearbox via the range gearbox. The gearbox is also equipped with a split gear unit, via which the side shaft is connectible via the input shaft. A brake mechanism is arranged to retard the side shaft in relation to the main shaft at a stage during a shifting operation when the main shaft is in the neutral position, while the side shaft is disconnected from the main shaft.

The document US2010044183 shows a transmission brake, which is controlled to prevent a tooth-to-tooth situation. An extra brake pulse is emitted during a synchronisation process in order to bring the toothing of the transmission parts into engagement.

### SUMMARY OF THE INVENTION

Despite prior art, there is a need to develop a brake mechanism for a gearbox, which facilitates the engagement of the starting gear, eliminates comfort disruptions when the starting gear is engaged and requires a short time for engagement of the starting gear.

The objective of the present invention is to provide a brake mechanism for a gearbox, which facilitates the engagement of the starting gear.

Another objective of the present invention is to provide a braking mechanism for a gearbox, which eliminates comfort disruptions in connection with engagement of the starting gear.

Another objective of the invention is to provide a braking mechanism for a gearbox, which requires a short time for engaging the starting gear.

These objectives are achieved with a braking mechanism for a gearbox of the type mentioned above, which is characterised by the features specified in patent claim 1.

These objectives are further achieved with a gearbox of the type mentioned above, which is characterised by the features specified in patent claim 9.

These objectives are achieved also with a vehicle of the type specified above, which is characterised by the features specified in patent claim 11.

These objectives are achieved also with a method of the type specified above, which is characterised by the features specified in patent claim 12.

By activating the braking mechanism, a turning motion is achieved in the side shaft, which turning motion facilitates the engagement of the starting gear. The turning is achieved by the at least one second disc in the braking mechanism, which disc is arranged to abut against the control means, interacting with the at least one first disc, which is anti-rotationally arranged to the brake shaft via splines. The first as well as the second disc are axially moveable between a compressed braking position and a pulled apart non-braking position.

The second disc's ability to rotate around the central axis of the brake shaft when the braking mechanism is activated, is achieved through a design of the second disc with a number of radially protruding lugs, which interact with the guide surface on the control means. The lugs' and the guide surface's interaction facilitates the turning motion when the braking mechanism is activated at the axial displacement of the second disc along the guide surface.

The first disc lacks radially projecting lugs and will, when the braking mechanism is activated, be dragged along with the second disc's turning motion through friction. When the braking mechanism is activated, both the first and second disc will thus be turned while they simultaneously are displaced axially along the braking shaft, which leads to the first disc turning the braking shaft around its central axis.

In order to achieve the turning motion of the braking shaft according to the invention when the braking mechanism is activated, the radially projecting lugs on the second disc must thus interact with the guide surface on the control means, so that the second disc and thus the first disc turn in relation to the housing. The guide surface is therefore, according to the invention, designed to be oblique or slanting in the axial direction of the brake shaft, which, when the braking mechanism is activated, produces a turning movement of the second disc, which transfers the turning movement through friction to the first disc which is compressed together with the second disc, and which in turn forwards the turning movement to the brake shaft. This facilitates engagement of the starting gear and leads to quick gear selection with good comfort.

The starting gear selection is thus achieved by braking the gearbox's side shaft to a standstill by activating the braking mechanism, and subsequently deactivating the braking mechanism, then activating the actuator for the actuating fork, so that the operating sleeve for gear selection may be displaced axially, and simultaneously activating the braking mechanism to turn the side shaft, as described above, in order to thus facilitate that the operating sleeve's toothing may be displaced into the hatches between the coupling teeth of the cogwheel for the starting gear.

Other advantages of the invention are set out in the detailed description below.

### BRIEF DESCRIPTION OF THE DRAWINGS

Below is a description of, as examples, preferred embodiments of the invention with reference to the enclosed drawings, in which:
- Fig. 1: shows schematically a vehicle in a side view, with a braking mechanism according to the present invention,
- Fig. 2: shows a sectional view of a gearbox with a braking mechanism according to the present invention,
- Fig. 3: shows a sectional view from the side of a braking mechanism according to a first embodiment of the present invention,
- Fig. 4: shows a sectional view of the braking mechanism according to the first embodiment of the present invention,
- Fig. 5: shows a sectional view of a braking mechanism according to a second embodiment of the present invention, and
- Fig. 6: shows a flow chart of a method to start a vehicle, comprising a gearbox with a braking mechanism according to the present invention.

### DETAILED DESCRIPTION OF PREFERRED EMBODIMENTS OF THE INVENTION

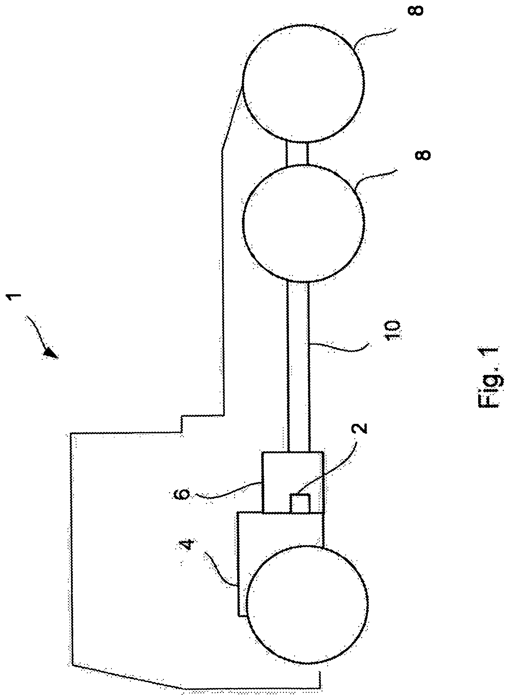

Fig. 1 shows a side view of a vehicle 1, e.g. a truck, which comprises a braking mechanism 2 according to the present invention. A combustion engine 4 is connected to a gearbox 6, which is further connected to the vehicle's 1 driving wheels 8 via a transmission, which comprises a propeller shaft 10.

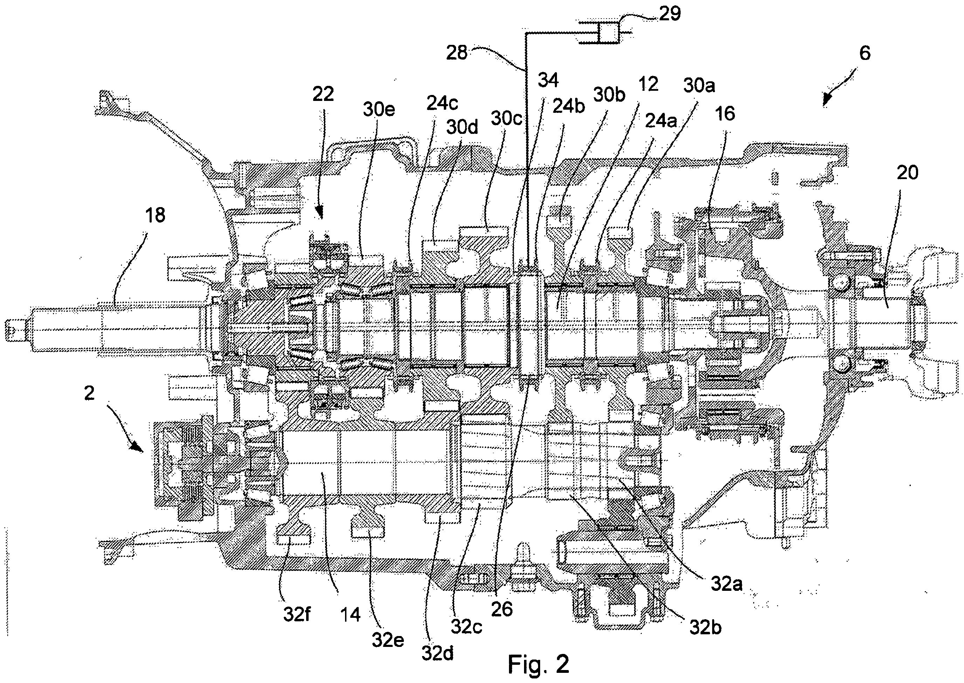

Fig. 2 shows a sectional view of the gearbox 6 with the braking mechanism 2 according to the present invention. The gearbox 6 is equipped with a main shaft 12 and a side shaft 14 parallel thereto. The gearbox 6 is equipped with a range gearbox 16, which is integrated in the gearbox 6. The main shaft 12 is connectible to an input shaft 18 to the gearbox 6 via the side shaft 14, and to an output shaft 20 in the gearbox 6 via the range gearbox 16. The gearbox 6 is equipped with a split gearbox device 22, via which the side shaft 14 is connectible via the input shaft 18. The brake mechanism 2 is connected with the side shaft 14 and is arranged to retard the side shaft 14 in connection with change of gears in the gearbox 6, in order to achieve synchronous rotation speeds in the side shaft 14 and the main shaft 12, so that the new gear may be engaged without any greater torque existing between those transmission parts in the gearbox 6 which are brought to engage with each other at the moment the new gear is engaged. The brake mechanism 2 is thus used to retard the side shaft 14 in relation to the main shaft 12 at a stage during a shifting operation, when the main shaft 12 is in the neutral position and the side shaft 14 is disconnected from the main shaft 12. The braking mechanism 2 may be arranged directly on the side shaft 14 or via a gear which is not displayed.

The gearbox 6 comprises operating sleeves 24a-24c, which are equipped internally with toothing 26. The operating sleeves 24a-24c are displaced axially through an operating fork 28 to be brought into engagement with the cogwheels 30a-30e placed on the main shaft 12. The operating forks 28 are activated through the operating element 29, which may consist of pneumatic or hydraulic cylinders. Only one operating fork 28 and one operating element 29 are shown schematically in Fig. 2. Each cogwheel 30a-30e, placed on the main shaft 12, is engaged with corresponding cogwheel elements 32a-32f, which are anti-rotationally connected with the side shaft 14. On shifting, the operating sleeve 24a-24c is displaced axially in order to engage with coupling teeth 34 arranged on a selectable cogwheel 30a-30e in order to connect the cogwheel 30a-30e to, and rotation lock it, on the main shaft 12.

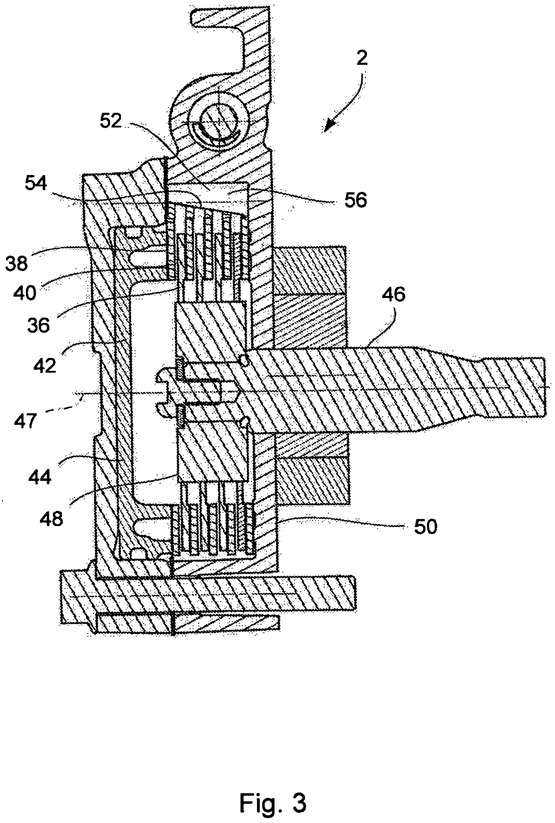

Fig. 3 shows a sectional view from the side of a braking mechanism 2 according to a first embodiment of the present invention. The brake mechanism 2 comprises at least one first disc 36 and at least one second disc 38. According to the embodiment displayed, the brake mechanism 2 is equipped with four first discs 36 and five second discs 38. The first discs 36 are equipped with a friction coating 40, which, when the braking mechanism 2 is activated, abuts the second discs 38 in order to achieve a braking torque. A power element 42 in the form of a pneumatically or hydraulically operated piston 44 is arranged to compress the first and second discs 36, 38 against each other. The first discs 36 slide axially on a rotatable brake shaft 46, which is designed to be connected to the side shaft 14. The brake shaft 46 shows a central axis 47. The first discs 36 are anti-rotationally arranged on the brake shaft 46 through a spline joint 48. It is possible to design the brake shaft 46 and the side shaft 14 as one connected unit, where the first discs 36 are arranged directly on the side shaft 14 and axially sliding through a spline joint on the side shaft 14. In this case, the side shaft 14 functions like a brake shaft 46 in the brake mechanism 2. The first and second discs 36, 38 are surrounded at least partly by a brake housing 50.

The brake mechanism 2 is equipped with at least one control means 52 with a guide surface 54, against which the second discs 38 are arranged to abut. According to the first embodiment, the control means 52 consists of wall sections 56 connected with the brake housing 50.

As shown in Fig. 3, the guide surface 54 is arranged to slope in the shaft's axial direction, so that the second discs 38 are turned around the brake shaft's 46 central axis 47 when the power element 42 compresses and axially displaces the first and second discs 36, 38. The guide surface 54 has an inclination which entails that the radial distance to the shaft changes linearly in the axial direction of the brake shaft 46. The radial distance of the guide surface 54 to the brake shaft 46 is reduced in the same direction as the one in which the second discs 38 are displaced, when the power element 42 compresses the first and the second discs 36, 38. Preferably, the inclination of the guide surface 54 is adapted to turn the brake shaft 46 and thus the side shaft 14 at an angle of rotation corresponding to the angular spread of a coupling tooth 34 of a start cogwheel 30 in the gearbox 6.

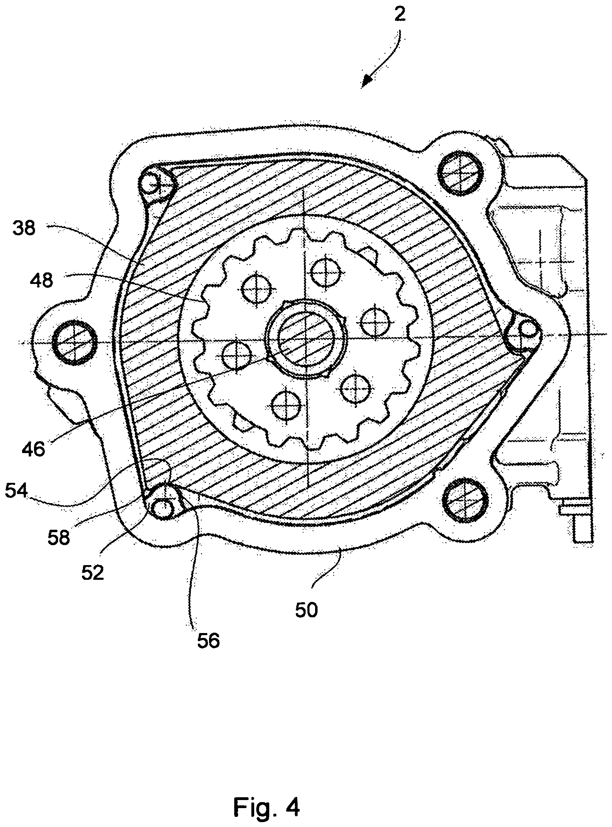

Fig. 4 shows the braking mechanism 2 according to the first embodiment in a sectional view. Three control means 52 are arranged essentially symmetrically in the brake housing 50, around the second discs 38. The second discs' 38 ability to rotate around the brake shaft's 46 central axis when the braking mechanism 2 is activated is achieved through the second discs 38 being designed with a number of radially protruding lugs 58, which interact with the guide surface 54 on the control means 52. The interaction of the lugs 58 and the guide surfaces 54 facilitates a turning of the second discs 38 when the braking mechanism 2 is activated at the axial displacement of the second discs 38 along the guide surface 54.

The first discs 36 lack radially protruding lugs and will, when the braking mechanism 2 is activated, be dragged along with the turning of the second discs 38 due to friction. When the braking mechanism 2 is activated, the first and second discs 36, 38 will be turned at the same time as they are displaced axially along the brake shaft 46, which leads to the first discs 36 turning the brake shaft 46 around its central axis 47, since the first discs 36 are anti-rotationally arranged on the brake shaft 46 through the spline joint 48.

In order to achieve the turning of the brake shaft 46, according to the invention, when the braking mechanism 2 is activated, the radially protruding lugs 58 on the second discs 38 must thus interact with the guide surface 54 on the control means 52, so that the second discs 38, and thus the first discs 36, turn in relation to the brake housing 50. The guide surfaces are therefore, according to the invention, designed to be oblique or slanting in the axial direction of the brake shaft 46, which, when the braking mechanism 2 is activated, produces a turning movement of the second discs 38, which transfers the turning movement through friction to the first discs 36, which are compressed together with the second discs 38, and which in turn forward the turning movement to the brake shaft 46. This facilitates engagement of the starting gear and leads to quick gear selection with good comfort.

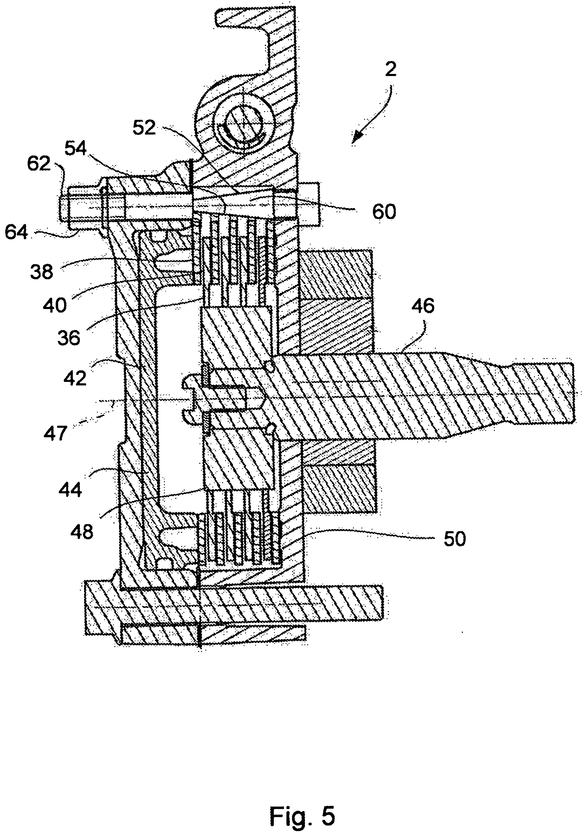

Fig. 5 shows a section view from the side of a braking mechanism 2, according to a second embodiment of the present invention. The second embodiment differs from the first, in that the control means 52 is a conical mandrel 60, which is connected with the brake housing 50. The mandrel 60 may be equipped with a screw thread 62 and connected with the brake housing 50 through a nut 64.

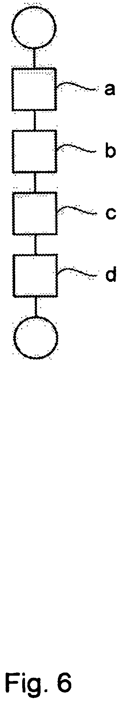

Fig. 6 shows a flow chart of a method to start a vehicle 1, comprising a gearbox 6 with a braking mechanism 2 according to the present invention. The method according to the invention to start the vehicle 1, comprises the steps:
a) to brake the side shaft 14 in the gearbox 6 to a standstill, by activating the braking mechanism 2,
b) to deactivate the braking mechanism 2,
c) to activate the operating element 29 for the operating fork 28 arranged for the operating sleeve 24, so that the operating sleeve 24 may be displaced axially for gear selection, and
d) to activate the braking mechanism 2 to turn the side shaft 14, so that the toothing 26 arranged on the operating sleeve 24 may be displaced into the hatches between the coupling teeth 34 of the starting gear's cogwheels 30.

The components and features specified above may within the framework of the invention be combined between the different embodiments specified.

## Claims

1. Braking device for a gearbox (6), comprising
at least one first disc (36);
at least one second disc (38);
a rotatable brake shaft (46) on which the first disc (36) is axially movable;
at least one control means (52) with a guide surface (54), against which the second disc (38) is arranged to abut;
a power element (42) which is arranged to compress the first and second discs (36, 38) against each other,
**characterised in that**
the guide surface (54) is arranged to slope in the brake shaft's (46) axial direction, so that the second disc (38) turns around the brake shaft's (46) central axis (47) when the power element 42 compresses and axially displaces the first and second discs (36, 38).

2. Braking mechanism according to claim 1, **characterised in that** the control means (52) constitute a continuous wall section (56) connected to a brake housing (50), which brake housing (50) at least partly surrounds the first and second discs (36, 38).

3. Braking mechanism according to claim 1, **characterised in that** the control means (52) is a conical mandrel (60).

4. Braking mechanism according to claim 3, **characterised in that** the mandrel (60) is connected to a brake housing (50) at least partly surrounding the first and second discs (36, 38).

5. Braking mechanism according to any of the previous claims, **characterised in that** three control means (52) are symmetrically arranged around the second disc (38).

6. Braking mechanism according to any of the previous claims, **characterised in that** the second disc (38) is equipped with at least one radially protruding lug (58), which abuts the guide surface (54).

7. Braking mechanism according to any of the previous claims, **characterised in that** the guide surface (54) has a slope which entails that the radial distance to the brake shaft (46) changes linearly in the brake shaft's (46) axial direction.

8. Braking mechanism according to claim 7, **characterised in that** the guide surface's (54) radial distance to the brake shaft (46) diminishes in the same direction in which the second disc (38) is displaced when the power element (42) compresses the first and second discs (36, 38).

9. Gearbox comprising a main shaft (12) and a side shaft (14), **characterised in that** the gearbox (6) comprises a braking mechanism (2) according to any of the claims 1-8, which braking mechanism (2) is connected via the brake shaft (46) to the side shaft (14).

10. Gearbox according to claim 9, **characterised in that** the guide surface's (54) inclination is adapted to turn the side shaft (14) at an angle of rotation corresponding to the angle spread for a coupling tooth (34) in a cogwheel (30) for the starting gear gearbox (6).

11. Vehicle (1), **characterised in that** it comprises a gearbox (6) according to any of the claims 9-10.

12. Method to start a vehicle (1) according to claim 11, **characterised by** the steps:
a) to brake the side shaft (14) arranged in the gearbox (6) to a standstill by activating the braking mechanism (2),
b) to deactivate the braking mechanism (2),
c) to activate an operating element (29) for an operating fork (28) arranged to an operating sleeve (24), so that the operating sleeve (24) may be displaced axially for gear selection, and
d) to activate the braking mechanism (2) to turn the side shaft (14), so that the toothing (26) arranged on the operating sleeve (24) may be displaced into the hatches between the coupling teeth (34) of the starting gear's cogwheels (30).

## Patentansprüche

1. Bremsvorrichtung für ein Getriebe (6), umfassend:
wenigstens eine erste Scheibe (36);
wenigstens eine zweite Scheibe (38);
eine drehbare Bremswelle (46), an der die erste Scheibe (36) axial bewegbar ist;
wenigstens ein Steuermittel (52) mit einer Führungsoberfläche (54), die gegen die zweite Scheibe (38) zur Anlage kommen kann;
ein Antriebselement (42), das dazu ausgebildet ist, die erste und die zweite Scheibe (36, 38) gegeneinander zusammenzudrücken,
**dadurch gekennzeichnet, dass**
die Führungsoberfläche (54) dazu ausgebildet ist, sich in Axialrichtung der Bremswelle (46) zu neigen, so dass sich die zweite Scheibe (38) dann um die Mittelachse (47) der Bremswelle (46) dreht, wenn das Antriebselement (42) die erste und die zweite Scheibe (36, 38) zusammendrückt und axial verschiebt.

2. Bremsmechanismus nach Anspruch 1, **dadurch gekennzeichnet, dass** die Steuermittel (52) einen mit einem Bremsgehäuse (50) verbundenen kontinuierlichen Wandbereich (56) ausbilden, wobei das Bremsgehäuse (50) wenigstens teilweise die erste und die zweite Scheibe (36, 38) umgibt.

3. Bremsmechanismus nach Anspruch 1, **dadurch gekennzeichnet, dass** das Steuermittel (52) eine konische Welle (60) ist.

4. Bremsmechanismus nach Anspruch 3, **dadurch gekennzeichnet, dass** die Welle (60) mit einem Bremsgehäuse (50) verbunden ist, das wenigstens teilweise die erste und die zweite Scheibe (36, 38) umgibt.

5. Bremsmechanismus nach einem der vorherigen Ansprüche, **dadurch gekennzeichnet, dass** drei Steuermittel (52) um die zweite Scheibe (38) herum symmetrisch angeordnet sind.

6. Bremsmechanismus nach einem der vorherigen Ansprüche, **dadurch gekennzeichnet, dass** die zweite Scheibe (38) mit wenigstens einem radial vorstehenden Ansatz (58) versehen ist, der an der Führungsoberfläche (54) anliegt.

7. Bremsmechanismus nach einem der vorherigen Ansprüche, **dadurch gekennzeichnet, dass** die Führungsoberfläche (54) eine Neigung aufweist, die vorsieht, dass sich der radiale Abstand an der Bremswelle (46) in der Axialrichtung der Bremswelle (46) linear ändert.

8. Bremsmechanismus nach Anspruch 7, **dadurch gekennzeichnet, dass** der radiale Abstand der Führungsoberfläche (54) an der Bremswelle (46) in derselben Richtung abnimmt, in der sich die zweite Scheibe (38) dann verschiebt, wenn das Antriebselement (42) die erste und die zweite Scheibe (36, 38) zusammendrückt.

9. Getriebe, das eine Hauptwelle (12) und eine Zwischenwelle (14) umfasst, **dadurch gekennzeichnet, dass** das Getriebe (6) einen Bremsmechanismus (2) nach einem der Ansprüche 1 bis 8 umfasst, wobei der Bremsmechanismus (2) über die Bremswelle (46) mit der Zwischenwelle (14) verbunden ist.

10. Getriebe nach Anspruch 9, **dadurch gekennzeichnet, dass** die Neigung der Führungsoberfläche (54) dazu ausgebildet ist, die Zwischenwelle (14) in einem Drehwinkel zu drehen, der dem Öffnungswinkel für einen Verbindungszahn (34) in einem Zahnrad (30) für den Anfahrgang des Getriebes (6) entspricht.

11. Fahrzeug (1), **dadurch gekennzeichnet, dass** es ein Getriebe (6) nach einem der Ansprüche 9 bis 10 umfasst.

12. Verfahren zum Starten eines Fahrzeugs (1) nach Anspruch 11, **gekennzeichnet durch** die Schritte:
a) Abbremsen der in dem Getriebe (6) angeordneten Zwischenwelle (14) bis zu einem Stillstand **durch** Aktivieren des Bremsmechanismus (2),
b) Deaktivieren des Bremsmechanismus (2),
c) Aktivieren eines Betätigungselements (29) für eine Betätigungsgabel (28), die an einer Betätigungshülse (24) ausgebildet ist, so dass die Betätigungshülse (24) für die Gangauswahl axial verschiebbar ist, und
d) Aktivieren des Bremsmechanismus (2), um die Zwischenwelle (14) zu drehen, so dass die an der Betätigungshülse (24) ausgebildete Verzahnung (26) in die Öffnungen zwischen den Verbindungszähnen (34) der Zahnräder (30) des Anfahrgangs verschiebbar ist.

## Revendications

1. Dispositif de freinage pour une boîte de vitesses (6), comprenant
au moins un premier disque (36) ;
au moins un second disque (38) ;
un arbre de frein rotatif (46) sur lequel le premier disque (36) est axialement déplaçable ;
au moins un moyen de commande (52) avec une surface de guidage (54), contre laquelle le second disque (38) est conçu pour venir en butée ;
un élément de puissance (42) disposé pour comprimer les premier et second disques (36, 38) l'un contre l'autre,
**caractérisé en ce que**
la surface de guidage (54) est disposée pour être inclinée dans la direction axiale de l'arbre de frein (46), de sorte que le second disque (38) tourne autour de l'axe central (47) de l'arbre de frein (46) lorsque l'élément de puissance (42) comprime et déplace axialement les premier et second disques (36, 38).

2. Mécanisme de freinage selon la revendication 1, **caractérisé en ce que** le moyen de commande (52) constitue une section de paroi continue (56) raccordée à un logement de frein (50), lequel logement de frein (50) entoure au moins partiellement les premier et second disques (36, 38).

3. Mécanisme de freinage selon la revendication 1, **caractérisé en ce que** le moyen de commande (52) est un mandrin conique (60).

4. Mécanisme de freinage selon la revendication 3, **caractérisé en ce que** le mandrin (60) est relié à un logement de frein (50) entourant au moins partiellement les premier et second disques (36, 38).

5. Mécanisme de freinage selon l'une quelconque des revendications précédentes, **caractérisé en ce que** trois moyens de commande (52) sont disposés symétriquement autour du second disque (38).

6. Mécanisme de freinage selon l'une quelconque des revendications précédentes **caractérisé en ce que** le second disque (38) est équipé d'au moins une patte (58) faisant saillie radialement et venant en butée contre la surface de guidage (54).

7. Mécanisme de freinage selon l'une quelconque des revendications précédentes, **caractérisé en ce que** la surface de guidage (54) présente une inclinaison telle que la distance radiale par rapport à l'arbre de frein (46) varie linéairement dans la direction axiale de l'arbre de frein (46).

8. Mécanisme de freinage selon la revendication 7, **caractérisé en ce que** la distance radiale de la surface de guidage (54) par rapport à l'arbre de frein (46) diminue dans la même direction que la direction de déplacement du second disque (38) lorsque l'élément de puissance (42) comprime les premier et second disques (36, 38).

9. Boîte de vitesses comprenant un arbre principal (12) et un arbre latéral (14), **caractérisée en ce que** la boîte de vitesses (6) comprend un mécanisme de freinage (2) selon l'une quelconque des revendications 1 à 8, lequel mécanisme de freinage (2) est relié à l'arbre latéral (14) via l'arbre de frein (46).

10. Boîte de vitesses selon la revendication 9, **caractérisé en ce que** l'inclinaison de la surface de guidage (54) est adaptée pour faire tourner l'arbre latéral (14) à un angle de rotation correspondant à la dispersion angulaire d'une dent d'accouplement (34) dans une roue dentée (30) pour le train de démarrage de la boîte de vitesse (6).

11. Véhicule (1), **caractérisé en ce qu'**il comprend une boîte de vitesses (6) selon l'une quelconque des revendications 9-10.

12. Procédé de démarrage d'un véhicule (1) selon la revendication 11, **caractérisé par** les étapes suivantes :
a) freiner l'arbre latéral (14) disposé dans la boîte de vitesses (6) jusqu'à l'arrêt en activant le mécanisme de freinage (2),
b) désactiver le mécanisme de freinage (2),
c) activer un élément d'actionnement (29) d'une fourchette d'actionnement (28) prévue pour un manchon d'actionnement (24), de sorte que le manchon d'actionnement (24) peut être déplacé axialement pour la sélection de rapport, et
d) activer le mécanisme de freinage (2) pour faire tourner l'arbre latéral (14), de telle sorte que la denture (26) disposée sur le manchon d'actionnement (24) peut être déplacée dans les espaces entre les dents d'accouplement (34) des roues dentées (30) du train de démarrage.
